# EUROPÄISCHE PATENTANMELDUNG

(11) **EP 1 473 186 A2**
(43) Veröffentlichungstag der Anmeldung: **03.11.2004**
(21) Anmeldenummer: 04008240.6
(22) Anmeldetag: 05.04.2004
(51) Int. Cl.: B60M 1/20

(54) **Kombination aus Abzugshalter und Seitenhalter**

(30) Priorität: 28.04.2003 DE 10319127
(71) Anmelder: SIEMENS AKTIENGESELLSCHAFT, 80333 München (DE)
(72) Erfinder: Weber, Michael, 91452 Wilhermsdorf (DE); Zimmermann, Robert, 91077 Neunkirchen am Brand (DE)

(57) **Zusammenfassung**

Die Erfindung betrifft eine Kombination aus einem Abzugshalter (1) und einen Seitenhalter (2), wobei der Seitenhalter (2) im Abzugshalter (1) drehbar gelagert ist. Es ist vorgesehen, dass in fluchtende Öffnungen in Anformungen (4, 3) des Abzugshalters (1) und des Seitenhalters (2) ein Bolzen (5) schiebbar ist, um dessen Längsachse der Seitenhalter (2) relativ zum Abzugshalter (1) drehbar ist.

## Beschreibung

Die Erfindung betrifft eine Kombination aus einem Abzugshalter und einen Seitenhalter, wobei der Seitenhalter im Abzugshalter drehbar gelagert ist.

Eine solche Kombination ist aus der DE 297 21 029 U1 bekannt. Dabei ist der Abzugshalter über ein Stützrohr mit einem Ausleger verbunden. Der Seitenhalter steht mit dem Oberleitungskettenwerk in Verbindung. Bewegungen des Kettenwerks, die z.B. durch vorbeifahrende Züge, aber auch durch Seitenwind verursacht sein können, führen dazu, dass sich der Seitenhalter relativ zum Abzugshalter bewegt. Die Reibung dieser beiden Bauteile aneinander führt zu einem unerwünscht schnellen Verschleiß. Da Abzugshalter und Seitenhalter infolge von Relativbewegungen nicht ständig in Kontakt stehen, kann außerdem eine Vorrichtung zur Funkentstörung notwendig sein.

Es ist bereits vorgeschlagen worden, zur Begrenzung der Relativbewegungen sogenannte Windsicherungen einzubauen. Diese Windsicherungen führen jedoch nicht zum gewünschten geringen Verschleiß. Gleiches gilt für sogenannte Stabilisierungselemente.

Zur Funktentstörung ist bereits vorgeschlagen worden, Stromverbinder einzusetzen, die Abzugshalter und Seitenhalter elektrisch leitend verbinden. Das Anbringen dieser Stromverbinder erfordert einen zusätzlichen Arbeitsschritt beim Aufbau eines Oberleitungskettenwerkes, der aufwändig und kostenintensiv ist.

Der Erfindung liegt die Aufgabe zugrunde, eine Kombination aus Abzugshalter und Seitenhalter anzugeben, die nur einem sehr geringen Verschleiß unterliegt. Darüber hinaus soll eine Funkentstörung ohne das Anbringen von Stromverbindern gewährleistet sein.

Die Aufgabe wird gemäß der Erfindung dadurch gelöst, dass in fluchtende Öffnungen in Anformungen des Abzugshalters und des Seitenhalters ein Bolzen schiebbar ist, um dessen Längsachse der Seitenhalter relativ zum Abzugshalter drehbar ist.

Mit einer solchen mechanischen Verbindung, die ein Drehgelenk ist, wird der Vorteil erzielt, dass außer der gewünschten Drehbewegung fast keine Relativbewegungen zwischen Seitenhalter und Abzugshalter möglich sind. Es kommt folglich vorteilhafterweise zu einem deutlich verringerten Verschleiß gegenüber bekannten Lösungen. Da störende Bewegungen infolge eines Seitenwindes ohnehin nicht auftreten können, werden vorteilhafterweise keine Windsicherung und auch kein Stabilisierungselement gebraucht. Darüber hinaus wird der Vorteil erzielt, dass durch die deutlich verbesserte Führung des Seitenhalters im Abzugshalter auch stets eine ausreichend gute elektrische Verbindung zwischen beiden Bauteilen gegeben ist, so dass man vorteilhafterweise ohne Stromverbinder auskommen kann.

Die Kombination aus Abzugshalter und Seitenhalter nach der Erfindung ist verschleißarm, was sogar bei starken Seitenwind gegeben ist. Außerdem ist die Kombination auch ohne aufwändige Stromverbinder funkentstört.

Beispielsweise bildet der Bolzen mit der Anformung des Abzugshalters eine Bajonettverbindung. Damit wird der Vorteil erzielt, dass der Seitenhalter in einfacher Weise zu montieren und auch wieder zu demontieren ist. Zum Montieren braucht der Bolzen nur eingesteckt und um einen Winkel verdreht zu werden.

Beispielsweise sind am Abzugshalter Begrenzungswangen angeformt, die sich beidseitig des Seitenhalters erstrecken.

Diese Begrenzungswangen stabilisieren die Lage des Seitenhalters noch mehr, so dass neben einer verschleißarmen Verbindung eine besonders zuverlässige elektrische Verbindung von Seitenhalter und Abzugshalter gegeben ist.

Beispielsweise ist zwischen der Anformung am Seitenhalter und der Anformung am Abzugshalter ein Federelement angeordnet. Dieses Federelement dient dazu, unerwünschte Relativbewegungen noch besser zu verhindern und gewährleistet darüber hinaus eine besonders gute elektrische Verbindung zwischen Abzugshalter und Seitenhalter. Man kommt sowohl ohne Windsicherung als auch ohne Stromverbinder aus.

Mit der Kombination aus Abzugshalter und Seitenhalter nach der Erfindung wird insbesondere der Vorteil erzielt, dass eine kostengünstige, einfach zu montierende, verschleißarme und sogar funkentstörte Verbindung des Seitenhalters mit dem Abzugshalter gegeben ist.

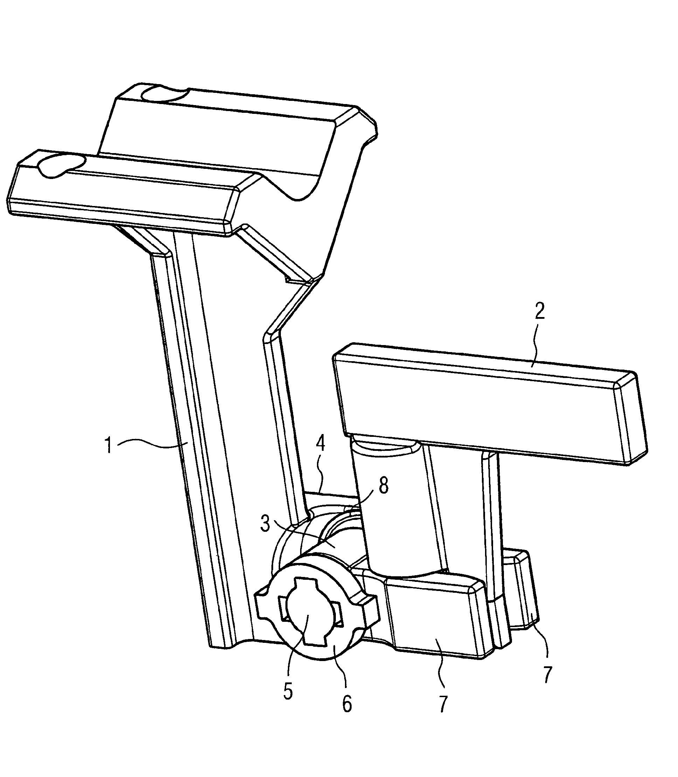

Ein Ausführungsbeispiel der Kombination aus Abzugshalter und Seitenhalter nach der Erfindung ist in der Zeichnung gezeigt:

Am Abzugshalter 1 ist ein Seitenhalter 2, der nur teilweise dargestellt ist, drehbar gelagert. Zur Vermeidung von Relativbewegungen des Seitenhalters 2 mit Ausnahme der gewünschten Drehbewegung greift eine Anformung 3 am Seitenhalter 2 in eine gabelförmige Anformung 4 am Abzugshalter 1 ein. In den beiden Anformungen 3 und 4 sind Öffnungen vorhanden, die bei montiertem Seitenhalter 2 miteinander fluchten. Durch die genannten Öffnungen hindurch ist ein Bolzen 5 geschoben, durch den die Verbindung zwischen Seitenhalter 2 und Abzugshalter 1 hergestellt wird. Um die Längsachse des Bolzens 5 ist der Seitenhalter 2 relativ zum Abzugshalter 1 drehbar. Der Bolzen 5 bildet mit der Anformung 4 des Abzugshalters 1 eine Bajonettverbindung. Mittels dieser als solchen bekannten Bajonettverbindung kann der Bolzen 5 in einfacher Weise positioniert und nur durch Drehen um einen Winkel arretiert werden.

Dazu kann ein Zapfen am Bolzen 5 in eine Führungsnut in der Anformung 4 selbst oder in einem Bajonettring 6, der mit der Anformung 4 verbunden ist, eingeführt sein. Es ist jedoch auch eine Verschraubung oder jede andere bekannte Verbindung des Bolzens 5 mit der Anformung 4 möglich. Auch Kombinationen der Verbindungsarten sind möglich. Zur besonders vorteilhaften Halterung des Seitenhalters 2 ist die Anformung 4 des Abzugshalters 1 Begrenzungswangen 7 bildend verlängert. Diese Begrenzungswangen 7 verlaufen beidseitig am Seitenhalter 2 entlang und stabilisieren seine Lage. Zwischen der Anformung 3 am Seitenhalter 2 und der Anformung 4 am Anzugshalter 1 ist ein Federelement 8 angeordnet, das in der Regel den Bolzen 5 umschließt. Dieses Federelement 8, das z.B. eine Tellerfeder ist, gewährleistet ständig eine leitende Verbindung zwischen Abzugshalter 1 und Seitenhalter 2, so dass die Kombination aus beiden Bauteilen besonders gut funkentstört ist. Insbesondere ist die Kombination verschleißarm, da es selbst bei Seitenwind kaum zu anderen Relativbewegungen zwischen Abzugshalter 1 und Seitenhalter 2 kommt als zur gewünschten Drehbewegung.

## Patentansprüche

1. Kombination aus einem Abzugshalter (1) und einem Seitenhalter (2), wobei der Seitenhalter (2) im Abzugshalter (1) drehbar gelagert ist,
**dadurch gekennzeichnet, dass** in fluchtende Öffnungen in Anformungen (4, 3) des Abzugshalters (1) und des Seitenhalters (2) ein Bolzen (5) schiebbar ist, um dessen Längsachse der Seitenhalter (2) relativ zum Abzugshalter (1) drehbar ist.

2. Kombination nach Anspruch 1,
**dadurch gekennzeichnet, dass** der Bolzen (5) mit der Anformung (4) des Abzugshalters (1) eine Bajonettverbindung bildet.

3. Kombination nach einem der Ansprüche 1 oder 2,
**dadurch gekennzeichnet, dass** am Abzugshalter (1) Begrenzungswangen (7) angeformt sind, die sich beidseitig des Seitenhalters (2) erstrecken.

4. Kombination nach einem der Ansprüche 1 bis 3,
**dadurch gekennzeichnet, dass** zwischen der Anformung (3) am Seitenhalter (2) und der Anformung (4) am Abzugshalter (1) ein Federelement (8) angeordnet ist.
